# FASCICULE DE BREVET EUROPEEN

(11) **EP 3 381 183 B1**
(45) Date de publication et mention de la délivrance du brevet: **14.02.2024**
(21) Numéro de dépôt: 16808939.9
(22) Date de dépôt: 25.11.2016
(51) Int. Cl.: H04N 5/76, H04N 21/433, H04N 21/434, H04N 21/47, H04N 21/472

(54) **PROCEDE DE PROGRAMMATION D'UN ENREGISTREMENT D'UNE EMISSION PAR UN DECODEUR DE TELEVISION NUMERIQUE**
VERFAHREN ZUR PROGRAMMIERUNG EINER AUFZEICHNUNG EINES PROGRAMMS DURCH EINEN DIGITALFERNSEHDECODIERER
METHOD FOR PROGRAMMING A RECORDING OF A PROGRAM BY MEANS OF A DIGITAL TELEVISION DECODER

(30) Priorité: 27.11.2015 FR 1561469
(43) Date de publication de la demande: 03.10.2018
(73) Titulaire: Sagemcom Broadband SAS, 92500 Rueil-Malmaison (FR)
(72) Inventeur: SODI, Frédéric, 92500 Rueil Malmaison (FR)
(74) Mandataire: Cabinet Le Guen Maillet
(86) Numéro de dépôt international: PCT/EP2016/078807
(87) Numéro de publication internationale: WO 2017/089539

(56) Documents cités:
- EP-A1- 1 675 400
- WO-A1-02/47380
- WO-A2-01/95616
- WO-A2-2004/057864

## Description

### DOMAINE TECHNIQUE DE L'INVENTION

Le domaine technique de l'invention est celui de la programmation d'enregistrements d'émissions, et en particulier celui de la programmation d'enregistrements d'émissions de télévision. La présente invention concerne un procédé de programmation d'un enregistrement d'une émission par un décodeur de télévision numérique.

### ARRIERE-PLAN TECHNOLOGIQUE DE L'INVENTION

Un décodeur de télévision numérique a typiquement un plan de services comportant une pluralité de services. Un service est typiquement une chaîne de télévision. Chaque service du plan de services est diffusé sur une unique fréquence. Chaque fréquence peut diffuser un ou plusieurs services. Pour chaque service, il peut exister une programmation des émissions de télévision dudit service : cette programmation comporte typiquement l'heure de début et la durée de chaque émission diffusée sur ledit service.

Il existe deux méthodes connues pour programmer l'enregistrement d'une émission par un décodeur de télévision numérique, respectant par exemple le consortium DVB (de l'anglais « Digital Video Broadcasting »).

Selon la première méthode, le décodeur de télévision numérique connaît au moins :
- un premier service du plan de services sur lequel l'émission à enregistrer est diffusée,
- une heure théorique de de l'émission à enregistrer, et
- une durée théorique de l'émission à enregistrer.

Selon la première méthode, le décodeur de télévision numérique déclenche l'enregistrement à l'heure théorique de début et arrête l'enregistrement à l'heure théorique de fin, le décodeur de télévision numérique calculant l'heure théorique de fin à partir de l'heure théorique de début et de la durée théorique de l'émission à enregistrer.

Un inconvénient de la première méthode est que le décodeur de télévision numérique ne peut pas tenir compte d'éventuelles dérives ou modifications dans la programmation du premier service. Ainsi, si un utilisateur programme selon la première méthode l'enregistrement d'une première émission sur le premier service, et que cette première émission commence plus tard et/ou dure plus longtemps que prévu, l'enregistrement obtenu ne sera pas complet : il manquera la fin de la première émission.

Selon la deuxième méthode :
- le décodeur de télévision numérique reçoit, pour le premier service et de manière répétée, une table normalisée comportant à chaque instant :
   o une première trame de données, relative à une première émission en cours de diffusion sur ledit service, et
   o une deuxième trame de données, relative à une deuxième émission à diffuser sur ledit service après la première émission ;
- le décodeur de télévision numérique connaît au moins un premier service du plan de services sur lequel l'émission à enregistrer est diffusée, une première fréquence sur laquelle le premier service est diffusé et un identifiant de l'émission à enregistrer.

Chaque trame de données relative à une émission comporte un identifiant de ladite émission. Le décodeur de télévision numérique déclenche l'enregistrement lorsque :
- le décodeur de télévision numérique détecte l'identifiant de l'émission à enregistrer dans la première trame de données, ou
- le décodeur de télévision numérique détecte une première transition entre la première trame de données et la deuxième trame de données comportant l'identifiant de l'émission à enregistrer.

Le décodeur de télévision numérique arrête l'enregistrement lorsque :
- le décodeur de télévision numérique ne détecte plus l'identifiant de l'émission à enregistrer dans la première trame de données, ou
- le décodeur de télévision numérique détecte une deuxième transition entre la première trame de données comportant l'identifiant de l'émission à enregistrer et la deuxième trame de données.

La deuxième méthode permet de tenir compte d'éventuelles dérives ou modifications dans la programmation du service sur lequel l'émission à enregistrer est diffusée. En effet, selon la deuxième méthode, le décodeur de télévision numérique ne tient pas compte d'informations théoriques statiques qui ont pu devenir fausses, mais utilise au contraire des informations mises à jour dynamiquement et qui intègrent donc toutes les éventuelles dérives ou modifications survenues dans la programmation.

La deuxième méthode, plus précise que la première méthode, présente toutefois l'inconvénient d'être peu robuste. En effet, en cas de non-réception de la table normalisée du service sur lequel est diffusée l'émission à enregistrer, le décodeur de télévision numérique se trouve dans l'incapacité complète de déclencher l'enregistrement de l'émission, et l'enregistrement n'a pas lieu du tout.

On connait dans l'état de la technique les documents EP 1 675 400 A1 et WO 01/95616 A2, le document EP 1 675 400 A1 décrivant notamment un procédé de programmation d'un enregistrement d'une émission par un décodeur numérique, procédé dans lequel le déclenchement de l'enregistrement est basé sur les données d'une table normalisée si ces données sont disponibles et dans le cas contraire le déclenchement se fait en fonction de l'heure théorique de début de l'émission à enregistrer.

### RESUME DE L'INVENTION

L'invention offre une solution aux problèmes évoqués précédemment, en proposant un procédé de programmation d'un enregistrement d'une émission par un décodeur de télévision numérique, le procédé étant à la fois précis et robuste. Un premier aspect de l'invention concerne ainsi un procédé de programmation d'un enregistrement d'une émission par un décodeur de télévision numérique selon la revendication 1, le décodeur de télévision numérique ayant un plan de services comportant une pluralité de services, l'émission à enregistrer étant diffusée sur un premier service de ladite pluralité, le décodeur de télévision numérique connaissant le premier service, un identifiant de l'émission à enregistrer et une heure théorique de début de l'émission à enregistrer, le procédé comporte les étapes suivantes :
- si (T1 ) le décodeur de télévision numérique reçoit une première table normalisée du premier service, la première table normalisée comportant à chaque instant une première trame de données relative à une première émission en cours de diffusion sur le premier service et une deuxième trame de données relative à une deuxième émission diffusée sur le premier service directement après la première émission, chaque trame de données relative à une émission comportant un identifiant de ladite émission, le décodeur de télévision numérique se place (st11 ) dans un premier mode de fonctionnement dans lequel il déclenche l'enregistrement de l'émission à enregistrer en fonction d'une détection de l'identifiant de ladite émission dans la première table normalisée ;
- si (T1 ) le décodeur de télévision numérique détecte une absence de réception de la première table normalisée, le décodeur de télévision numérique se place (st12) dans un deuxième mode de fonctionnement selon lequel il déclenche l'enregistrement de l'émission en fonction de l'heure théorique de début de l'émission ;
- l'absence de la première table normalisée étant détectée si un premier délai s'écoule sans que le décodeur de télévision numérique ne reçoive la première table normalisée,
- la première table normalisée, quand le premier service en a une, étant diffusée par une première fréquence, ladite première fréquence étant utilisée pour diffuser le premier service, le décodeur de télévision numérique calcule une heure limite de connexion à la première fréquence en fonction de l'heure théorique de début de l'émission à enregistrer et d'un intervalle temporel de sécurité, l'intervalle temporel de sécurité étant choisi de manière que le décodeur de télévision numérique dispose, une fois connecté à la première fréquence, d'un temps suffisant avant l'heure théorique de début de l'émission à enregistrer pour recevoir la première table normalisée et traiter l'information contenue dans la première table normalisée, l'heure limite de connexion à la première fréquence étant antérieure à l'heure théorique de début de l'émission à enregistrer ;
- si le décodeur de télévision numérique se place dans le deuxième mode de fonctionnement avant l'heure limite de connexion, le décodeur de télévision numérique se connecte à la première fréquence au plus tard à ladite heure limite de connexion ;
- si le décodeur de télévision numérique se place dans le deuxième mode de fonctionnement à l'heure limite de connexion ou après l'heure limite de connexion, le décodeur de télévision numérique se connecte à la première fréquence dès qu'il se place dans le deuxième mode de fonctionnement.

On entend par « une deuxième émission diffusée directement après la première émission » le fait qu'il n'y a pas de tierce émission diffusée entre les première et deuxième émissions. Un intervalle peut être prévu entre les première et deuxième émissions, durant lequel aucune diffusion n'a lieu ou durant lequel un court programme tel qu'une ou plusieurs publicités, ou une ou plusieurs bandes-annonces, est diffusé. Alternativement, la diffusion de la deuxième émission peut commencer dès que la diffusion de la première émission est terminée.

Le procédé selon un aspect de l'invention utilise avantageusement un décodeur de télévision numérique ayant des premier et deuxième modes de fonctionnement. Le décodeur de télévision numérique bascule dynamiquement du premier mode de fonctionnement vers le deuxième mode de fonctionnement ou du deuxième mode de fonctionnement vers le premier mode de fonctionnement, en fonction de sa réception, ou de son absence de réception, d'une première table normalisée. L'intervalle temporel de sécurité est avantageusement choisi de manière que le décodeur de télévision numérique dispose, une fois connecté à la première fréquence, d'un temps suffisant avant l'heure théorique de début de l'émission à enregistrer pour recevoir la première table normalisée et traiter l'information contenue dans la première table normalisée. En cas de réception effective de la première table normalisée, le décodeur de télévision numérique peut alors avantageusement se placer dans le premier mode de fonctionnement. Le procédé selon un aspect de l'invention garantit ainsi que l'enregistrement programmé est bien déclenché, qu'un enregistrement est donc systématiquement obtenu à l'issue du procédé et qu'il s'agit du meilleur enregistrement possible compte-tenu notamment des fréquences auxquelles le décodeur de télévision numérique est connecté à chaque instant.

Outre les caractéristiques qui viennent d'être évoquées dans le paragraphe précédent, le procédé de programmation d'un enregistrement d'une émission par un décodeur de télévision numérique selon un aspect de l'invention peut présenter une ou plusieurs caractéristiques complémentaires parmi les suivantes, considérées individuellement ou selon toutes les combinaisons techniquement possibles :
- Le décodeur de télévision numérique est initialement dans le premier mode de fonctionnement. On privilégie ainsi avantageusement le premier mode de fonctionnement du décodeur de télévision numérique, qui tient compte d'éventuelles modifications dans la programmation du premier service sur lequel est diffusée l'émission à enregistrer afin d'offrir un enregistrement précis et complet.
- Pour chaque service ayant une table normalisée, la table normalisée dudit service est diffusée au moins par une fréquence; le décodeur de télévision numérique connaît, pour chaque service du plan de services, un ensemble d'autres fréquences diffusant la table normalisée propre audit service ; si le décodeur de télévision numérique n'est connecté à aucune fréquence diffusant la première table normalisée, le décodeur de télévision numérique se place automatiquement dans le deuxième mode de fonctionnement.
- Dans le premier mode de fonctionnement, le décodeur de télévision numérique déclenche l'enregistrement de l'émission lorsqu'il détecte que l'identifiant de l'émission à enregistrer est présent dans la première trame de données.
- Alternativement, dans le premier mode de fonctionnement, le décodeur de télévision numérique déclenche l'enregistrement de l'émission à enregistrer lorsque, ayant préalablement détecté que l'identifiant de l'émission à enregistrer est présent dans la deuxième trame de données, il détecte une première transition entre la première trame de données et la deuxième trame de données comportant l'identifiant de l'émission à enregistrer. On anticipe ainsi avantageusement le déclenchement de l'enregistrement de l'émission.
- Le décodeur de télévision numérique détecte une absence de réception de la première table normalisée si un premier délai s'écoule sans que le décodeur de télévision numérique ne reçoive la première table normalisée. Le premier délai est préférentiellement supérieur ou égal à la durée D qui sépare deux réceptions successives de la première table normalisée. Le premier délai peut être nul. La réception de la première table normalisée par le décodeur de télévision peut être périodique : dans ce cas, deux réceptions successives de la première table normalisée sont toujours séparées par la même durée D, qui est une période. Alternativement, la réception de la première table normalisée par le décodeur de télévision peut ne pas être périodique : dans ce cas, la durée D séparant deux réceptions successives de la première table normalisée est variable.
- Le décodeur de télévision numérique connaît une durée théorique de l'émission à enregistrer ; le décodeur de télévision numérique calcule une heure théorique de fin de l'émission à enregistrer à partir de l'heure théorique de début et de la durée théorique de l'émission à enregistrer ; dans le premier mode de fonctionnement, le décodeur de télévision numérique arrête l'enregistrement de l'émission à enregistrer en fonction d'une détection d'absence de l'identifiant de ladite émission dans la table normalisée ; dans le deuxième mode de fonctionnement, le décodeur de télévision numérique arrête l'enregistrement de l'émission à enregistrer en fonction de l'heure théorique de fin de l'émission à enregistrer.
- Dans le premier mode de fonctionnement, le décodeur de télévision numérique arrête l'enregistrement de l'émission lorsqu'il détecte que l'identifiant de l'émission à enregistrer disparaît de la première trame de données.

Un deuxième aspect de l'invention concerne un décodeur de télévision numérique pour l'enregistrement d'une émission selon la revendication 10, le décodeur de télévision numérique ayant un plan de services comportant une pluralité de services, l'émission à enregistrer étant diffusée sur un premier service de ladite pluralité, le décodeur de télévision numérique connaissant le premier service, un identifiant de l'émission à enregistrer et une heure théorique de début de l'émission à enregistrer, le décodeur de télévision numérique comportant des éléments pour mettre en oeuvre les étapes du procédé de programmation selon le premier aspect de l'invention. Le décodeur de télévision numérique est un composant hardware qui comporte au moins une interface, un processeur ou microprocesseur et une mémoire physique non transitoire comportant des codes instructions pour la mise en oeuvre des étapes du procédé de programmation selon le premier aspect de l'invention. Lorsque l'on prête une action au décodeur de télévision numérique, celle-ci est en fait effectuée par un processeur ou microprocesseur du décodeur de télévision numérique, commandé par les codes instructions enregistrés dans une mémoire physique non transitoire du décodeur de télévision numérique. Lorsque le décodeur de télévision numérique émet ou reçoit un message, ce message est émis ou reçu via une interface de communication dudit décodeur de télévision numérique.

Un troisième aspect de l'invention concerne un produit programme d'ordinateur selon la revendication 8 comprenant des instructions qui, lorsque le programme est exécuté par un ordinateur, conduisent celui-ci à mettre en oeuvre les étapes du procédé de programmation selon le premier aspect de l'invention. En particulier, l'homme du métier reconnaîtra qu'un décodeur de télévision numérique est un exemple d'ordinateur. Le troisième aspect de l'invention concerne donc en particulier un produit programme d'ordinateur comprenant des instructions qui, lorsque le programme est exécuté par un décodeur de télévision numérique, conduisent celui-ci à mettre en oeuvre les étapes du procédé de programmation selon le premier aspect de l'invention.

Le programme d'ordinateur comprenant des instructions exécutables par une machine pour mettre en oeuvre la méthode selon un aspect de l'invention peut être mis en oeuvre par un ordinateur comprenant au moins une interface, un processeur et une mémoire physique non transitoire, également désignée d'une manière générale comme étant un support non transitoire lisible par ordinateur ou une mémoire non transitoire de stockage. L'ordinateur est un ordinateur à usage particulier, étant donné qu'il est programmé pour exécuter les étapes spécifiques du procédé décrit dans le présent document. La mémoire non transitoire est codée ou programmée avec des instructions de code spécifiques pour mettre en oeuvre le procédé décrit dans le présent document et les étapes qui lui sont associées. La mémoire non transitoire communique avec le processeur physique de sorte que le processeur physique, lorsqu'il est utilisé, lit et exécute les instructions de code spécifiques qui sont intégrées dans la mémoire non transitoire. L'interface de l'ordinateur à usage particulier communique avec le processeur physique et reçoit des paramètres d'entrée qui sont traités par le processeur physique.

Un quatrième aspect de l'invention concerne un support d'enregistrement lisible par un ordinateur selon la revendication 9, sur lequel est enregistré le produit programme d'ordinateur selon le troisième aspect de l'invention. Le quatrième aspect de l'invention concerne en particulier un support d'enregistrement lisible par un décodeur de télévision numérique, sur lequel est enregistré le produit programme d'ordinateur selon le troisième aspect de l'invention. Le support d'enregistrement tel qu'utilisé dans l'invention est non-transitoire et fait référence à tout support participant à fournir des instructions à un processeur pour l'exécution desdites instructions. Un tel support peut prendre de nombreuses formes, y compris, de manière non limitative : des supports non volatils, des supports volatils et des supports de transmission. Les supports non volatils comprennent, par exemple, des disques optiques ou magnétiques. Les supports volatils comprennent, par exemple, des mémoires dynamiques. Les supports de transmission comprennent, par exemple, des câbles coaxiaux, des fils de cuivre et des fibres optiques. Les formes courantes de supports lisibles par ordinateur comprennent, par exemple, une disquette, un disque souple, un disque dur, une bande magnétique ou tout autre support magnétique, un CD-ROM, un DVD ou tout autre support optique, des cartes perforées, bandes de papier ou tout autre support physique avec des motifs de trou, une RAM, une PROM, une EPROM, une mémoire FLASH-EPROM ou toute autre puce ou cartouche mémoire, une onde porteuse, et tout autre support à partir duquel un ordinateur peut lire.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre un diagramme des étapes d'un procédé de programmation d'un enregistrement d'une émission par un décodeur de télévision numérique selon un premier mode de réalisation de l'invention.
- La figure 2 montre un diagramme des étapes d'un procédé de programmation d'un enregistrement d'une émission par un décodeur de télévision numérique selon un deuxième mode de réalisation de l'invention.
- La figure 3 montre un diagramme des étapes d'un procédé de programmation d'un enregistrement d'une émission par un décodeur de télévision numérique selon un troisième mode de réalisation de l'invention.
- La figure 4 montre un diagramme des étapes d'un procédé de programmation d'un enregistrement d'une émission par un décodeur de télévision numérique selon un quatrième mode de réalisation de l'invention.

### DESCRIPTION DETAILLEE D'AU MOINS UN MODE DE REALISATION DE L'INVENTION

Sauf précision contraire, un même élément apparaissant sur des figures différentes présente une référence unique.

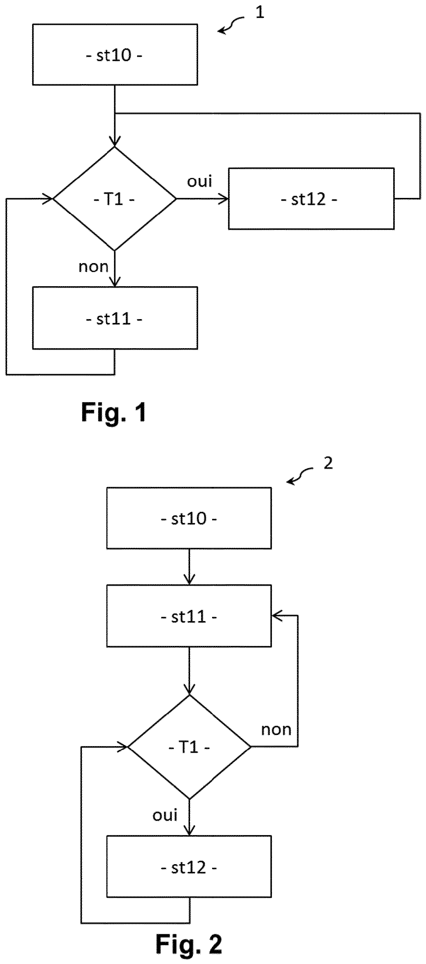

La figure 1 montre un diagramme des étapes d'un procédé 1 de programmation d'un enregistrement d'une émission par un décodeur de télévision numérique selon un premier mode de réalisation de l'invention.

Le décodeur de télévision numérique a typiquement un plan de services comportant une pluralité de services, l'émission à enregistrer étant diffusée sur un premier service de ladite pluralité. On emploie indifféremment dans la présente description les termes « service » et « chaîne de télévision ». Le premier service est diffusé sur une première fréquence. La première fréquence peut diffuser uniquement le premier service, ou alternativement diffuser un ou plusieurs autres services en plus du premier service.

Chaque service de la pluralité de services peut avoir une table normalisée qui lui est propre, ou bien ne pas avoir de table normalisée. Une table normalisée propre à un service comporte à chaque instant une première trame de données relative à une première émission en cours de diffusion sur ledit service et une deuxième trame de données relative à une deuxième émission diffusée sur ledit service directement après la première émission, chaque trame de données relative à une émission comportant un identifiant de ladite émission.

Dans un exemple particulier, le premier service a une première table normalisée qui lui est propre. Dans ce cas, la première table normalisée est diffusée au moins sur la première fréquence. La première table normalisée peut également être diffusée sur une ou plusieurs autres fréquences. La première fréquence, qui diffuse la première table normalisée, peut également diffuser une ou plusieurs autres tables normalisées, chaque autre table normalisée étant propre à un service du plan de services. Une table normalisée est par exemple une table EIT (de l'anglais « Event Information Table ») selon le consortium DVB.

Le décodeur de télévision numérique reçoit typiquement un flux de signaux depuis un opérateur de télévision. Le flux de signaux comporte les tables normalisées des services du plan de services qui ont une table normalisée.

Le procédé 1 selon le premier mode de réalisation de l'invention comporte initialement une étape st10, à l'issue de laquelle le décodeur de télévision numérique connaît :
- un premier service du plan de services sur lequel l'émission à enregistrer est diffusée,
- un identifiant de l'émission à enregistrer,
- une heure théorique de début de l'émission à enregistrer, et
- une durée théorique de l'émission à enregistrer.

L'utilisateur peut fournir au décodeur de télévision numérique l'information d'un identifiant de l'émission à enregistrer, par l'intermédiaire d'une interface homme-machine. Connaissant l'identifiant de l'émission à enregistrer, le décodeur de télévision numérique peut alors retrouver les informations de service de diffusion de l'émission à enregistrer, fréquence(s) de diffusion du service, heure théorique de début et durée théorique de l'émission dans un flux de signaux émis par un opérateur de télévision numérique à destination du décodeur de télévision numérique. Alternativement, le décodeur de télévision numérique peut recevoir, dans le flux de signaux émis par l'opérateur de télévision numérique, des informations concernant une pluralité d'émissions de télévision ; ces informations comportent typiquement, pour chaque émission de télévision, un identifiant de ladite émission, une heure théorique de début et une durée théorique de ladite émission. Le décodeur de télévision numérique peut alors afficher pour l'utilisateur une liste de la pluralité d'émissions de télévision dont le décodeur de télévision numérique a reçu les informations. L'utilisateur peut alors sélectionner une émission à enregistrer parmi la pluralité d'émissions, le décodeur de télévision. On entend par « le décodeur de télévision numérique connaît une information » ou « le décodeur de télévision numérique prend connaissance d'une information » le fait que le décodeur de télévision numérique a enregistré ou enregistre cette information dans une mémoire.

Le décodeur de télévision numérique calcule typiquement une heure théorique de fin de l'émission à enregistrer à partir de l'heure théorique de début et de la durée théorique de l'émission à enregistrer. L'heure théorique de début de l'émission à enregistrer peut avantageusement être modifiée lors d'une mise à jour ou d'une actualisation, par exemple en fonction d'une information reçue par le décodeur de réception numérique dans le flux de signaux émis par l'opérateur de télévision numérique. Si l'heure théorique de début de l'émission à enregistrer est modifiée, le décodeur de télévision numérique recalcule avantageusement l'heure théorique de fin à partir de l'heure modifiée de début et de la durée théorique de l'émission à enregistrer.

Le procédé 1 selon le premier mode de réalisation de l'invention comporte ensuite une étape T1 selon laquelle le décodeur de télévision numérique teste s'il détecte une absence de réception de la première table normalisée propre au premier service. L'étape T1 peut donc être associée à la question : « le décodeur de télévision numérique détecte-t-il une absence de réception de la première table normalisée ? ».
- Si le décodeur de télévision numérique ne détecte pas d'absence de réception de la première table normalisée, c'est-à-dire si la réponse à la question de l'étape T1 est « non », le procédé 1 selon le premier mode de réalisation de l'invention comporte ensuite une étape st11 selon laquelle le décodeur de télévision numérique se place dans un premier mode de fonctionnement. Le procédé 1 selon le premier mode de réalisation de l'invention comporte ensuite à nouveau l'étape T1 de test.
- Si le décodeur de télévision numérique détecte au contraire une absence de réception de la première table normalisée, c'est-à-dire si la réponse à la question de l'étape T1 est « oui », le procédé 1 selon le premier mode de réalisation de l'invention comporte ensuite une étape st12 selon laquelle le décodeur de télévision numérique se place dans un deuxième mode de fonctionnement. Le procédé 1 selon le premier mode de réalisation de l'invention comporte ensuite à nouveau l'étape T1 de test.

Le décodeur de télévision numérique détecte typiquement une absence de réception de la première table normalisée si un premier délai s'écoule sans que le décodeur de télévision numérique ne reçoive la première table normalisée. Le premier délai est préférentiellement supérieur ou égal à la durée D qui sépare deux réceptions successives de la première table normalisée. La durée D dépend typiquement du standard de communication utilisé. Dans un exemple particulier de réalisation, le standard de télécommunication ETSI est utilisé. La durée D est alors préférentiellement une durée supérieure ou égale à 25 ms, et inférieure ou égale à 2 secondes.

Dans le premier mode de fonctionnement :
- le décodeur de télévision numérique déclenche l'enregistrement de l'émission à enregistrer en fonction d'une détection de l'identifiant de ladite émission dans la première table normalisée ;
- l'enregistrement de l'émission ayant été préalablement déclenché, le décodeur de télévision numérique arrête l'enregistrement de l'émission à enregistrer en fonction d'une détection d'absence de l'identifiant de ladite émission dans la première table normalisée.

Dans le premier mode de fonctionnement, le décodeur de télévision numérique peut déclencher l'enregistrement de l'émission à enregistrer lorsqu'il détecte que l'identifiant de l'émission à enregistrer est présent dans la première trame de données de la première table normalisée. Alternativement, le décodeur de télévision numérique peut déclencher l'enregistrement de l'émission à enregistrer lorsque, ayant préalablement détecté que l'identifiant de l'émission à enregistrer est présent dans la deuxième trame de données, le décodeur de télévision numérique détecte une première transition entre la première trame de données et la deuxième trame de données comportant l'identifiant de l'émission à enregistrer. Cette alternative permet avantageusement d'anticiper le déclenchement de l'enregistrement de l'émission à enregistrer, afin de diminuer le risque que le début de l'émission à enregistrer ne soit pas enregistré en pratique.

Dans le premier mode de fonctionnement, le décodeur de télévision numérique peut arrêter l'enregistrement de l'émission à enregistrer lorsqu'il détecte que l'identifiant de l'émission à enregistrer disparaît de la première trame de données. Alternativement, le décodeur de télévision numérique peut arrêter l'enregistrement de l'émission à enregistrer lorsque, ayant préalablement détecté que l'identifiant de l'émission à enregistrer est présent dans la première trame de données, de décodeur de télévision numérique détecte une deuxième transition entre la première trame de données comportant l'identifiant de l'émission à enregistrer et la deuxième trame de données.

Dans le deuxième mode de fonctionnement :
- le décodeur de télévision numérique déclenche l'enregistrement de l'émission à enregistrer en fonction de l'heure théorique de début de l'émission à enregistrer ou, le cas échéant, en fonction de l'heure modifiée de début de l'émission à enregistrer ;
- l'enregistrement de l'émission ayant été préalablement déclenché, le décodeur de télévision numérique arrête l'enregistrement de l'émission à enregistrer en fonction de l'heure théorique de fin de l'émission à enregistrer.

La figure 2 montre un diagramme des étapes d'un procédé 2 de programmation d'un enregistrement d'une émission par un décodeur de télévision numérique selon un deuxième mode de réalisation de l'invention. Le procédé 2 selon le deuxième mode de réalisation de l'invention comporte initialement l'étape st10, précédemment décrite, à l'issue de laquelle le décodeur de télévision numérique connaît :
- le premier service du plan de services sur lequel l'émission à enregistrer est diffusée,
- l'identifiant de l'émission à enregistrer,
- l'heure théorique de début de l'émission à enregistrer, et
- la durée théorique de l'émission à enregistrer.

Le procédé 2 selon le deuxième mode de réalisation de l'invention comporte ensuite l'étape st11, précédemment décrite, selon laquelle le décodeur de télévision numérique se place dans le premier mode de fonctionnement, puis l'étape T1, précédemment décrite, selon laquelle le décodeur de télévision numérique teste s'il détecte une absence de réception de la première table normalisée.
- Si la réponse à la question : « le décodeur de télévision numérique détecte-t-il une absence de réception de la première table normalisée ? » de l'étape T1 de test est « non », le procédé 2 selon le deuxième mode de réalisation de l'invention comporte à nouveau l'étape st11 selon laquelle le décodeur de télévision numérique se place dans le premier mode de fonctionnement.
- Si la réponse à la question : « le décodeur de télévision numérique détecte-t-il une absence de réception de la première table normalisée ? » de l'étape T1 de test est « oui », le procédé 2 selon le deuxième mode de réalisation de l'invention comporte ensuite l'étape st12 selon laquelle le décodeur de télévision numérique se place dans le deuxième mode fonctionnement.

Selon le deuxième mode de réalisation de l'invention, le décodeur de télévision numérique est initialement dans le premier mode de fonctionnement. Le deuxième mode de réalisation de l'invention privilégie donc avantageusement, par défaut, le premier mode de fonctionnement.

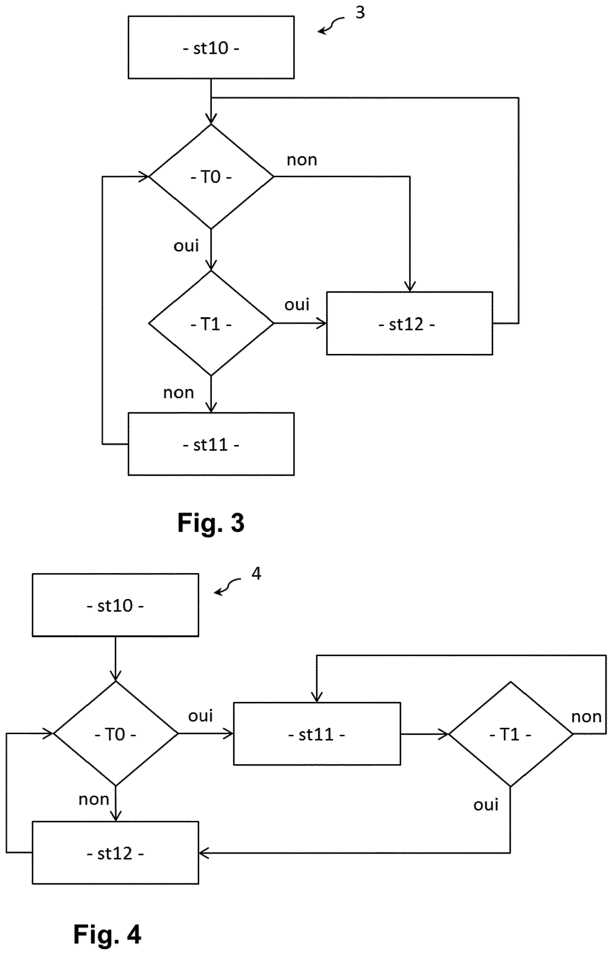

La figure 3 montre un diagramme des étapes d'un procédé 3 de programmation d'un enregistrement d'une émission par un décodeur de télévision numérique selon un troisième mode de réalisation de l'invention.

Le procédé 3 selon le troisième mode de réalisation de l'invention comporte initialement une étape T0 de test selon laquelle le décodeur de télévision numérique teste s'il est connecté à au moins une fréquence diffusant la première table normalisée. L'étape T0 peut donc être associée à la question : « le décodeur de télévision numérique est-il connecté à au moins une fréquence diffusant la première table normalisée ? ».
- Si le décodeur n'est connecté à aucune fréquence diffusant la première table normalisée, c'est-à-dire si la réponse à la question de l'étape T0 de test est « non », le procédé 3 selon l'alternative du premier mode de réalisation comporte ensuite l'étape st12 selon laquelle le décodeur de télévision numérique se place dans le deuxième mode de fonctionnement, puis à nouveau l'étape T0 de test.
- Si le décodeur est connecté à au moins une fréquence diffusant la première table normalisée, c'est-à-dire si la réponse à la question de l'étape T0 de test est « oui », le procédé 3 selon le troisième mode de réalisation comporte ensuite l'étape T1 de test, précédemment décrite, selon laquelle le décodeur de télévision numérique teste s'il détecte une absence de réception de la première table normalisée.
- Si le décodeur de télévision numérique détecte une absence de réception de la première table normalisée, c'est-à-dire si la réponse à la question de l'étape T1 de test est « oui », le procédé 3 selon le troisième mode de réalisation comporte ensuite l'étape st12 selon laquelle le décodeur de télévision numérique se place dans le deuxième mode de fonctionnement, puis à nouveau l'étape T0 de test, précédemment décrite.
- Si le décodeur de télévision numérique ne détecte pas d'absence de réception de la première table normalisée, c'est-à-dire si la réponse à la question de l'étape T1 de test est « non », le procédé 3 selon le troisième mode de réalisation de l'invention comporte ensuite l'étape st11 selon laquelle le décodeur de télévision numérique se place dans le premier mode de fonctionnement, puis à nouveau l'étape T0 de test, précédemment décrite.

La figure 4 montre un diagramme des étapes d'un procédé 4 de programmation d'un enregistrement d'une émission par un décodeur de télévision numérique selon un quatrième mode de réalisation de l'invention.

Le procédé 4 selon le quatrième mode de réalisation de l'invention comporte initialement l'étape T0 de test, précédemment décrite, selon laquelle le décodeur de télévision numérique teste s'il est connecté à au moins une fréquence diffusant la première table normalisée.
- Si la réponse à la question « le décodeur de télévision numérique est-il connecté à au moins une fréquence diffusant la première table normalisée ? » de l'étape T0 de test est « non », le procédé 4 selon le quatrième mode de réalisation comporte ensuite l'étape st12 selon laquelle le décodeur de télévision numérique se place dans le deuxième mode de fonctionnement, puis à nouveau l'étape T0 de test, précédemment décrite.
- Si la réponse à la question « le décodeur de télévision numérique est-il connecté à au moins une fréquence diffusant la première table normalisée ? » de l'étape T0 de test est « oui », le procédé 4 selon le quatrième mode de réalisation de l'invention comporte ensuite l'étape st11 selon laquelle le décodeur de télévision numérique se place dans le premier mode de fonctionnement, puis l'étape T1 de test, précédemment décrite, selon laquelle le décodeur de télévision numérique teste s'il détecte une absence de réception de la première table normalisée.
- Si le décodeur de télévision numérique détecte une absence de réception de la première table normalisée, c'est-à-dire si la réponse à l'étape T1 de test est « oui », le procédé 4 selon le quatrième mode de réalisation de l'invention comporte ensuite l'étape st12 selon laquelle le décodeur de télévision numérique se place dans le deuxième mode de fonctionnement, puis l'étape T0 de test, précédemment décrite.
- Si le décodeur de télévision numérique ne détecte pas d'absence de réception de la première table normalisée, c'est-à-dire si la réponse à l'étape T1 de test est « non », le procédé 4 selon le quatrième mode de réalisation de l'invention comporte à nouveau l'étape st11 selon laquelle le décodeur de télévision numérique se place dans le premier mode de fonctionnement, puis à nouveau l'étape T1 de test, précédemment décrite.

On peut généralement distinguer deux cas dans lesquels le décodeur de télévision numérique reçoit correctement la première table normalisée du premier service.
- Dans le premier cas, le décodeur de télévision numérique est connecté à la première fréquence et il n'y a pas de dysfonctionnement à l'émission de la première fréquence par l'opérateur de télévision ou à la réception de la première fréquence par le décodeur de télévision numérique. En effet, la première table normalisée est au moins diffusée sur la première fréquence.
- Dans le deuxième cas, le décodeur de télévision numérique est connecté à une deuxième fréquence, distincte de la première fréquence, sur laquelle la première table normalisée est diffusée grâce à une technique de diffusion croisée (« cross-diffusion » en anglais), et il n'y a pas de dysfonctionnement à l'émission de la deuxième fréquence par l'opérateur de télévision ou à la réception de la deuxième fréquence par le décodeur de télévision numérique.

Les premier et deuxième cas ne sont pas exclusifs l'un de l'autre, c'est-à-dire que le décodeur de télévision numérique peut être simultanément connecté à la première fréquence et à la deuxième fréquence. Le décodeur de télévision numérique peut typiquement être simultanément connecté à deux ou quatre fréquences différentes. Il existe également des décodeurs de télévision numérique pouvant être simultanément connectés à seize fréquences différentes.

Dans le procédé 3 selon le troisième mode de réalisation de l'invention ou dans le procédé 4 selon le quatrième mode de réalisation de l'invention, le décodeur de télévision numérique connaît avantageusement, pour chaque service du plan de services ayant une table normalisée diffusée sur une fréquence donnée, un ensemble d'autres fréquences qui diffusent la table normalisée propre audit service. Si ladite table normalisée n'est diffusée que sur la fréquence donnée, l'ensemble d'autres fréquences est vide. Si le décodeur de télévision numérique n'est connecté à aucune fréquence diffusant la première table normalisée, le décodeur de télévision numérique se place avantageusement automatiquement dans le deuxième mode de fonctionnement : ce comportement est notamment illustré par l'étape T0 de test, qui a été décrite en lien avec les figures 3 et 4.

D'une manière générale, lorsque le décodeur de télévision numérique est programmé par un procédé selon l'un quelconque des modes de réalisation de l'invention pour enregistrer une émission sur la première fréquence du plan de services, le décodeur de télévision numérique se connecte, à un moment donné, à la première fréquence pour pouvoir réaliser effectivement l'enregistrement programmé. Dans ce contexte, le décodeur de télévision numérique calcule avantageusement une heure limite de connexion à la première fréquence en fonction de l'heure théorique de début de l'émission à enregistrer et d'un intervalle temporel de sécurité. L'heure limite de connexion à la première fréquence est avantageusement antérieure à l'heure théorique de début de l'émission à enregistrer. L'heure limite de connexion à la première fréquence peut alternativement être égale à l'heure théorique de début de l'émission à enregistrer : dans ce cas, l'intervalle temporel de sécurité est nul. Le décodeur de télévision numérique utilise avantageusement l'heure limite de connexion à la première fréquence dans son deuxième mode de fonctionnement :
- si le décodeur de télévision numérique se place dans le deuxième mode de fonctionnement avant l'heure limite de connexion, le décodeur de télévision numérique se connecte à la première fréquence au plus tard à ladite heure limite de connexion. Le décodeur de télévision numérique peut tout à fait être connecté à la première fréquence avant l'heure limite de connexion et/ou avant de se placer dans le deuxième mode de fonctionnement.
- Si le décodeur de télévision numérique se place dans le deuxième mode de fonctionnement à l'heure limite de connexion ou après l'heure limite de connexion, le décodeur de télévision numérique se connecte à la première fréquence dès qu'il se place dans le deuxième mode de fonctionnement.

L'intervalle temporel de sécurité est avantageusement choisi de manière que, lorsque le décodeur de télévision numérique se connecte à la première fréquence à l'heure limite de connexion, le décodeur de télévision numérique dispose d'un temps suffisant pour recevoir la première table normalisée et traiter les données contenues dans la première table normalisée. Ainsi, dans le cas où le décodeur de télévision numérique est initialement dans le deuxième mode de fonctionnement car il n'est connecté à aucune fréquence diffusant la première table normalisée, le décodeur de télévision numérique a avantageusement le temps de basculer dans le premier mode de fonctionnement, grâce à sa connexion à la première fréquence au plus tard à l'heure limite de connexion. Malgré le temps suffisant dont il dispose, le décodeur de télévision numérique peut tout à fait ne pas basculer dans le premier mode de fonctionnement, par exemple s'il ne reçoit pas la première table normalisée en raison d'un dysfonctionnement.

Alternativement, le premier service peut ne pas avoir de table normalisée. Dans ce cas, le décodeur de télévision numérique détecte de fait une absence de réception de la première table normalisée et le décodeur de télévision numérique se place dans le deuxième mode de fonctionnement.

## Revendications

1. Procédé (1 , 2, 3, 4) de programmation d'un enregistrement d'une émission par un décodeur de télévision numérique, le décodeur de télévision numérique ayant un plan de services comportant une pluralité de services, l'émission à enregistrer étant diffusée sur un premier service de ladite pluralité, le décodeur de télévision numérique connaissant le premier service, un identifiant de l'émission à enregistrer et une heure théorique de début de l'émission à enregistrer, le procédé comporte les étapes suivantes :
- si (T1 ) le décodeur de télévision numérique reçoit une première table normalisée du premier service, la première table normalisée comportant à chaque instant une première trame de données relative à une première émission en cours de diffusion sur le premier service et une deuxième trame de données relative à une deuxième émission diffusée sur le premier service directement après la première émission, chaque trame de données relative à une émission comportant un identifiant de ladite émission, le décodeur de télévision numérique se place (st11 ) dans un premier mode de fonctionnement dans lequel il déclenche l'enregistrement de l'émission à enregistrer en fonction d'une détection de l'identifiant de ladite émission dans la première table normalisée ;
- si (T1 ) le décodeur de télévision numérique détecte une absence de réception de la première table normalisée, le décodeur de télévision numérique se place (st12) dans un deuxième mode de fonctionnement selon lequel il déclenche l'enregistrement de l'émission en fonction de l'heure théorique de début de l'émission ;
**caractérisé en ce que** :
- l'absence de la première table normalisée étant détectée si un premier délai s'écoule sans que le décodeur de télévision numérique ne reçoive la première table normalisée,
- la première table normalisée, quand le premier service en a une, étant diffusée par une première fréquence, ladite première fréquence étant utilisée pour diffuser le premier service, le décodeur de télévision numérique calcule une heure limite de connexion à la première fréquence en fonction de l'heure théorique de début de l'émission à enregistrer et d'un intervalle temporel de sécurité, l'intervalle temporel de sécurité étant choisi de manière que le décodeur de télévision numérique dispose, une fois connecté à la première fréquence, d'un temps suffisant avant l'heure théorique de début de l'émission à enregistrer pour recevoir la première table normalisée et traiter l'information contenue dans la première table normalisée, l'heure limite de connexion à la première fréquence étant antérieure à l'heure théorique de début de l'émission à enregistrer ;
- si le décodeur de télévision numérique se place dans le deuxième mode de fonctionnement avant l'heure limite de connexion, le décodeur de télévision numérique se connecte à la première fréquence au plus tard à ladite heure limite de connexion ;
- si le décodeur de télévision numérique se place dans le deuxième mode de fonctionnement à l'heure limite de connexion ou après l'heure limite de connexion, le décodeur de télévision numérique se connecte à la première fréquence dès qu'il se place dans le deuxième mode de fonctionnement.

2. Procédé (1 , 2, 3, 4) de programmation selon la revendication précédente **caractérisé en ce que** :
- pour chaque service ayant une table normalisée, la table normalisée dudit service est diffusée au moins par une fréquence ;
- le décodeur de télévision numérique connaît, pour chaque service du plan de services, un ensemble d'autres fréquences diffusant la table normalisée propre audit service ;
- si le décodeur de télévision numérique n'est connecté à aucune fréquence diffusant la première table normalisée, le décodeur de télévision numérique se place automatiquement dans le deuxième mode de fonctionnement.

3. Procédé (1 , 2, 3, 4) de programmation selon l'une quelconque des revendications précédentes **caractérisé en ce que**, dans le premier mode de fonctionnement, le décodeur de télévision numérique déclenche l'enregistrement de l'émission lorsqu'il détecte que l'identifiant de l'émission à enregistrer est présent dans la première trame de données.

4. Procédé (1 , 2, 3, 4) de programmation selon l'une quelconque des revendications 1 à 2 **caractérisé en ce que**, dans le premier mode de fonctionnement, le décodeur de télévision numérique déclenche l'enregistrement de l'émission à enregistrer lorsque, ayant préalablement détecté que l'identifiant de l'émission à enregistrer est présent dans la deuxième trame de données, il détecte une première transition entre la première trame de données et la deuxième trame de données comportant l'identifiant de l'émission à enregistrer.

5. Procédé (1 , 2, 3, 4) de programmation selon l'une quelconque des revendications précédentes **caractérisé en ce que** :
- le décodeur de télévision numérique connaît une durée théorique de l'émission à enregistrer ;
- le décodeur de télévision numérique calcule une heure théorique de fin de émission à enregistrer à partir de l'heure théorique de début et de la durée théorique de l'émission à enregistrer ;
- dans le premier mode de fonctionnement, le décodeur de télévision numérique arrête l'enregistrement de l'émission à enregistrer en fonction d'une détection d'absence de l'identifiant de ladite émission dans la table normalisée ;
- dans le deuxième mode de fonctionnement, le décodeur de télévision numérique arrête l'enregistrement de l'émission à enregistrer en fonction de l'heure théorique de fin de l'émission à enregistrer.

6. Procédé (1 , 2, 3, 4) de programmation selon la revendication précédente **caractérisé en ce que**, dans le premier mode de fonctionnement, le décodeur de télévision numérique arrête l'enregistrement de l'émission lorsqu'il détecte que l'identifiant de l'émission à enregistrer disparaît de la première trame de données.

7. Procédé (2, 4) de programmation selon l'une quelconque des revendications précédentes **caractérisé en ce que** le décodeur de télévision numérique est initialement dans le premier mode de fonctionnement.

8. Produit programme d'ordinateur comprenant des instructions qui, lorsque le programme est exécuté par ordinateur, conduisent celui-ci à mettre en oeuvre les étapes du procédé (1 , 2, 3, 4) de programmation selon l'une quelconque des revendications précédentes.

9. Support d'enregistrement lisible par un ordinateur, sur lequel est enregistré le produit programme d'ordinateur selon la revendication 8.

10. Décodeur de télévision numérique pour l'enregistrement d'une émission, le décodeur de télévision numérique ayant un plan de services comportant une pluralité de services, l'émission à enregistrer étant diffusée sur un premier service de ladite pluralité, le décodeur de télévision numérique connaissant le premier service, un identifiant de l'émission à enregistrer et une heure théorique de début de l'émission à enregistrer, le décodeur de télévision numérique étant **caractérisé en ce qu'**il comporte des éléments pour mettre en oeuvre les étapes du procédé (1 , 2, 3, 4) de programmation selon l'une quelconque des revendications 1 à 7.

## Patentansprüche

1. Verfahren zur Programmierung (1, 2, 3, 4) einer Aufzeichnung einer Sendung durch einen digitalen Fernsehdecoder, wobei der digitale Fernsehdecoder einen Dienstplan hat, der eine Vielzahl von Diensten aufweist, wobei die aufzuzeichnende Sendung auf einem ersten Dienst der Vielzahl ausgestrahlt wird, wobei der digitale Fernsehdecoder den ersten Dienst, eine Kennung der aufzuzeichnenden Sendung und eine theoretische Anfangszeit der aufzuzeichnenden Sendung kennt, wobei das Verfahren die folgenden Schritte aufweist:
- wenn (T1) der digitale Fernsehdecoder eine erste normalisierte Tabelle des ersten Diensts empfängt, wobei die erste normalisierte Tabelle zu jedem Zeitpunkt einen ersten Datenrahmen bezüglich einer ersten Sendung, die gerade auf dem ersten Dienst ausgestrahlt wird, und einen zweiten Datenrahmen bezüglich einer zweiten Sendung aufweist, die auf dem ersten Dienst direkt nach der ersten Sendung ausgestrahlt wird, wobei jeder Datenrahmen bezüglich einer Sendung eine Kennung der Sendung aufweist, platziert (st11) der digitale Fernsehdecoder sich in einer ersten Betriebsart, in der er die Aufzeichnung der aufzuzeichnenden Sendung abhängig von einer Erfassung der Kennung der Sendung in der ersten normalisierten Tabelle auslöst;
- wenn (T1) der digitale Fernsehdecoder eine Abwesenheit eines Empfangs der ersten normalisierten Tabelle erfasst, platziert (st12) der digitale Fernsehdecoder sich in einer zweiten Betriebsart, gemäß der er die Aufzeichnung der Sendung abhängig von der theoretischen Anfangszeit der Sendung auslöst;
**dadurch gekennzeichnet, dass**:
- die Abwesenheit der ersten normalisierten Tabelle erfasst wird, wenn eine erste Verzögerung vergeht, ohne dass der digitale Fernsehdecoder die erste normalisierte Tabelle empfängt,
- wobei die erste normalisierte Tabelle, wenn der erste Dienst eine hat, durch eine erste Frequenz ausgestrahlt wird, wobei die erste Frequenz verwendet wird, um den ersten Dienst auszustrahlen, der digitale Fernsehdecoder eine Ablaufzeit der Verbindung mit der ersten Frequenz abhängig von der theoretischen Anfangszeit der aufzuzeichnenden Sendung und von einem Sicherheitszeitintervall berechnet, wobei das Sicherheitszeitintervall so gewählt wird, dass der digitale Fernsehdecoder, wenn er mit der ersten Frequenz verbunden ist, über eine ausreichende Zeit vor der theoretischen Anfangszeit der aufzuzeichnenden Sendung verfügt, um die erste normalisierte Tabelle zu empfangen und die in der ersten normalisierten Tabelle enthaltene Information zu verarbeiten, wobei die Ablaufzeit der Verbindung mit der ersten Frequenz vor der theoretischen Anfangszeit der aufzuzeichnenden Sendung liegt;
- wenn der digitale Fernsehdecoder sich vor der Ablaufzeit der Verbindung in der zweiten Betriebsart platziert, der digitale Fernsehdecoder sich spätestens zur Ablaufzeit der Verbindung mit der ersten Frequenz verbindet;
- wenn der digitale Fernsehdecoder sich zur Ablaufzeit der Verbindung oder nach der Ablaufzeit der Verbindung in der zweiten Betriebsart platziert, der digitale Fernsehdecoder sich mit der ersten Frequenz verbindet, sobald er sich in der zweiten Betriebsart platziert.

2. Programmierverfahren (1, 2, 3, 4) nach dem vorhergehenden Anspruch, **dadurch gekennzeichnet, dass**:
- für jeden Dienst, der eine normalisierte Tabelle hat, die normalisierte Tabelle des Diensts mindestens durch eine Frequenz ausgestrahlt wird;
- der digitale Fernsehdecoder für jeden Dienst des Dienstplans eine Einheit anderer Frequenzen kennt, die die dem Dienst eigene normalisierte Tabelle ausstrahlen;
- wenn der digitale Fernsehdecoder mit keiner Frequenz verbunden ist, die die erste normalisierte Tabelle ausstrahlt, der digitale Fernsehdecoder sich automatisch in der zweiten Betriebsart platziert.

3. Programmierverfahren (1, 2, 3, 4) nach einem der vorhergehenden Ansprüche, **dadurch gekennzeichnet, dass** in der ersten Betriebsart der digitale Fernsehdecoder die Aufzeichnung der Sendung auslöst, wenn er erfasst, dass die Kennung der aufzuzeichnenden Sendung im ersten Datenrahmen vorhanden ist.

4. Programmierverfahren (1, 2, 3, 4) nach einem der Ansprüche 1 bis 2, **dadurch gekennzeichnet, dass** in der ersten Betriebsart der digitale Fernsehdecoder die Aufzeichnung der aufzuzeichnenden Sendung auslöst, wenn er, nachdem er vorher erfasst hat, dass die Kennung der aufzuzeichnenden Sendung im zweiten Datenrahmen vorhanden ist, einen ersten Übergang zwischen dem ersten Datenrahmen und dem zweiten Datenrahmen erfasst, der die Kennung der aufzuzeichnenden Sendung aufweist.

5. Programmierverfahren (1, 2, 3, 4) nach einem der vorhergehenden Ansprüche, **dadurch gekennzeichnet, dass**:
- der digitale Fernsehdecoder eine theoretische Dauer der aufzuzeichnenden Sendung kennt;
- der digitale Fernsehdecoder eine theoretische Endzeit der aufzuzeichnenden Sendung ausgehend von der theoretischen Anfangszeit und der theoretischen Dauer der aufzuzeichnenden Sendung berechnet;
- in der ersten Betriebsart der digitale Fernsehdecoder die Aufzeichnung der aufzuzeichnenden Sendung abhängig von einer Erfassung einer Abwesenheit der Kennung der Sendung in der normalisierten Tabelle stoppt;
- in der zweiten Betriebsart der digitale Fernsehdecoder die Aufzeichnung der aufzuzeichnenden Sendung abhängig von der theoretischen Endzeit der aufzuzeichnenden Sendung stoppt.

6. Programmierverfahren (1, 2, 3, 4) nach dem vorhergehenden Anspruch, **dadurch gekennzeichnet, dass** in der ersten Betriebsart der digitale Fernsehdecoder die Aufzeichnung der Sendung stoppt, wenn er erfasst, dass die Kennung der aufzuzeichnenden Sendung aus dem ersten Datenrahmen verschwindet.

7. Programmierverfahren (2, 4) nach einem der vorhergehenden Ansprüche, **dadurch gekennzeichnet, dass** der digitale Fernsehdecoder ursprünglich in der ersten Betriebsart ist.

8. Computerprogrammprodukt, das Anweisungen enthält, die wenn das Programm von einem Computer ausgeführt wird, diesen veranlassen, die Schritte des Programmierverfahrens (1, 2, 3, 4) nach einem der vorhergehenden Ansprüche durchzuführen.

9. Computerlesbarer Aufzeichnungsträger, auf dem das Computerprogrammprodukt nach Anspruch 8 aufgezeichnet ist.

10. Digitaler Fernsehdecoder zur Aufzeichnung einer Sendung, wobei der digitale Fernsehdecoder einen Dienstplan hat, der eine Vielzahl von Diensten aufweist, wobei die aufzuzeichnende Sendung auf einem ersten Dienst der Vielzahl ausgestrahlt wird, wobei der digitale Fernsehdecoder den ersten Dienst, eine Kennung der aufzuzeichnenden Sendung und eine theoretische Anfangszeit der aufzuzeichnenden Sendung kennt, wobei der digitale Fernsehdecoder **dadurch gekennzeichnet ist, dass** er Elemente aufweist, um die Schritte des Programmierverfahrens (1, 2, 3, 4) nach einem der Ansprüche 1 bis 7 durchzuführen.

## Claims

1. Method (1, 2, 3, 4) for programming a recording of a programme by a digital television set-top box, the digital television set top box having a service plan including a plurality of services, the programme to be recorded being broadcast on a first service of said plurality, the digital television set-top box knowing the first service, an identifier of the programme to be recorded and a theoretical start time of the programme to be recorded, the method comprises the following steps:
- if (T1) the digital television set-top box receives a first standardised table of the first service, the first standardised table comprising at each instant a first data frame relating to a first programme being broadcast on the first service and a second data frame relating to a second programme broadcast on the first service directly after the first programme, each data frame relating to a programme comprising an identifier of said programme, the digital television set-top box goes (st11) into a first operating mode in which it triggers the recording of the programme to be recorded according to a detection of the identify of said programme in the first standardised table;
- if (T1) the digital television set-top box detects an absence of reception of the first standardised table, the digital television set-top box goes (st12) into a second operating mode according to which it triggers the recording of the broadcast according to the theoretical start time of the programme;
**characterised in that**
- the absence of the first standardised table being detected if a first period elapses without the digital television set-top box receiving the first standardised table;
- the first standardised table, when the first service has one, being broadcast by a first frequency, said first frequency being used to broadcast the first service, the digital television set-top box calculates a limit time for connection at the first frequency according to the theoretical start time of the broadcast to be recorded and a safety time interval, the safety time interval being selected so that the digital television set-top box has, once connected at the first frequency, sufficient time before the theoretical start time of the programme to be recorded to receive the first standardised table and to process the information contained in the first standardised table, the limit time for connection at the first frequency being prior to the theoretical start time of the programme to be recorded;
- if the digital television set-top box goes into the second operating mode before the time limit for connection, the digital television set-top box connects at the first frequency no later than said limit time for connection;
- if the digital television set-top box goes into the second operating mode at the limit time for connection or after the limit time for connection, the digital television set-top box connects at the first frequency as soon as it goes into the second operating mode.

2. Programming method (1, 2, 3, 4) according to the preceding claim, **characterised in that**:
- for each service having a standardised table, the standardised table of said service is broadcast at least by one frequency;
- the digital television set-top box knows, for each service in the service plan, a set of other frequencies broadcasting the standardised table particular to said service;
- if the digital television set-top box is not connected to any frequency broadcasting the first standardised table, the digital television set-top box automatically goes into the second operating mode.

3. Programming method (1, 2, 3, 4) according to either one of the preceding claims, **characterised in that**, in the first operating mode, the digital television set-top box triggers the recording of the programme when it detects that the identifier of the programme to be recorded is present in the first data frame.

4. Programming method (1, 2, 3, 4) according to either one of claims 1 to 2, **characterised in that**, in the first operating mode, the digital television set-top box triggers the recording of the programme to be recorded when, having previously detected that the identifier of the programme to be recorded is present in the second data frame, it detects a first transition between the first data frame and the second data frame comprising the identifier of the programme to be recorded.

5. Programming method (1, 2, 3, 4) according to any one of the preceding claims, **characterised in that**:
- the digital television set-top box knows a theoretical duration of the programme to be recorded;
- the digital television set-top box calculates a theoretical end time of the programme to be recorded from the theoretical start time and from the theoretical duration of the programme to be recorded;
- in the first operating mode, the digital television set-top box stops the recording of the programme to be recorded according to a detection of absence of the identity of said programme in the standardised table;
- in the second operating mode, the digital television set-top box stops the recording of the programme to be recorded according to the theoretical end time of the programme to be recorded.

6. Programming method (1, 2, 3, 4) according to the preceding claim, **characterised in that**, in the first operating mode, the digital television set-top box stops the recording of the programme when it detects that the identifier of the programme to be recorded disappears from the first data frame.

7. Programming method (2, 4) according to any one of the preceding claims, **characterised in that** the digital television set-top box is initially in the first operating mode.

8. Computer program product comprising instructions which, when the program is executed by computer, lead the latter to perform the steps of the programming method (1, 2, 3, 4) according to any one of the preceding claims.

9. Recording medium that can be read by a computer, on which the computer program product according to claim 8 is recorded.

10. Digital television set-top box for recording a programme, the digital television set-top box having a service plan comprising a plurality of services, the programme to be recorded being broadcast on a first service in said plurality, the digital television set-top box knowing the first service, an identifier of the programme to be recorded and a theoretical start time of the programme to be recorded, the digital television set-top box being **characterised in that** it comprises elements for performing the steps of the programming method (1, 2, 3, 4) according to any one of claims 1 to 7.
